(19) Europäisches Patentamt / European Patent Office / Office européen des brevets

(11) **EP 2 815 914 A1**

(12) **EUROPEAN PATENT APPLICATION**
published in accordance with Art. 153(4) EPC

(43) Date of publication:
**24.12.2014 Bulletin 2014/52**

(51) Int Cl.:
**B60L 15/20** (2006.01)   **G05B 11/36** (2006.01)
**H02P 29/00** (2006.01)

(21) Application number: **13749354.0**

(22) Date of filing: **24.01.2013**

(86) International application number:
**PCT/JP2013/051495**

(87) International publication number:
**WO 2013/121852 (22.08.2013 Gazette 2013/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **15.02.2012 JP 2012030284**

(71) Applicant: **Nissan Motor Company, Limited**
**Kanagawa-ku**
**Yokohama-shi**
**Kanagawa 221-0023 (JP)**

(72) Inventors:
• **TSUTSUMI, Junji**
  **Kanagawa 243-0123 (JP)**
• **SAWADA, Akira**
  **Kanagawa 243-0123 (JP)**

(74) Representative: **Osha Liang SARL**
**32, avenue de l'Opéra**
**75002 Paris (FR)**

(54) **VIBRATION SUPPRESSION CONTROL DEVICE FOR ELECTRIC MOTOR-DRIVEN VEHICLE AND METHOD FOR CONTROLLING VIBRATION SUPPRESSION**

(57)    A damping control device of a vehicle using an electric motor for suppressing vibration of the vehicle using the electric motor as a power source includes a damping control means configured to reduce torsional vibration of a vehicle drive system, a friction coefficient estimation means configured to estimate a friction coefficient of a road on which the vehicle is running, and a control parameter correction means configured to correct a control parameter in executing a damping control by the damping control means based on the friction coefficient of the road surface estimated by the friction coefficient estimation means.

START

S1  INPUT PROCESS

S2  TORQUE TARGET VALUE CALCULATION PROCESS

S3  ROAD SURFACE $\mu$ ESTIMATION PROCESS

S4  DAMPING CONTROL CONSTANT CHANGING PROCESS

S5  CURRENT COMMAND VALUE CALCULATION PROCESS

S6  CURRENT CONTROL

END

FIG. 2

**Description**

TECHNICAL FIELD

This invention relates to a damping control device and a damping control method of a vehicle using an electric motor.
The contents of Tokugan 2012-30284, with a filing date of February 15, 2012 in Japan, are hereby incorporated by reference.

BACKGROUND ART

A damping control method for suppressing vibration generated in a vehicle is conventionally known in a vehicle using an electric motor such as an electric vehicle or a hybrid vehicle. For example, according to patent literature 1, a first torque target value $Tm1$ is calculated by performing a damping filter processing for removing or reducing a natural vibration frequency component of a torque transmission system of a vehicle, on a drive torque target value $Tm$ of a drive motor calculated from an accelerator pedal opening, a vehicle speed and the like. A second torque target value $Tm2$ is then calculated by performing an external disturbance suppression filter processing based on a deviation between an estimated value and an actual value of a motor rotation speed. A drive torque command value is obtained by adding these target values, and a current of the drive motor is so controlled that a torque of the drive motor matches the drive torque command value, thereby suppressing vibration.
The patent literature 1 aims to suppress rotational vibration due to, for example, a resonance between the motor and a wheel drive system from the motor to wheels, by a motor torque control, thereby making it possible to obtain a damping effect also when an accelerator pedal is depressed in a stopped state or a decelerated state.

CITATION LIST

PATENT LITERATURE

Patent literature 1: JP2003-9566 A

SUMMARY OF INVENTION

In an electric drive vehicle such as an electric vehicle or a hybrid vehicle, a resonance point of a wheel drive system from an electric motor to wheels also changes as a road surface friction coefficient (road surface $\mu$) changes in wet weather, cold climates and the like.
However, according to the above patent literature 1, there is a difference between a resonance point on an actual road surface and a resonance point in a damping control if the vehicle runs on a low friction coefficient road surface (low $\mu$ road) using a control parameter corresponding to a high friction coefficient road surface (high $\mu$ road). Thus, in the above patent literature 1, a sufficient damping control effect cannot be obtained when the road surface friction coefficient (road surface $\mu$) changes. There is a problem of the occurrence of hunting such as when the accelerator pedal is depressed in a stopped state or a decelerated state in a scene where the road surface friction coefficient (road surface $\mu$) changes.
It is therefore an object of this invention is to provide a damping control device of a vehicle using an electric motor that can provide a sufficient damping control effect even when a road surface friction coefficient changes.
This invention achieves the above object by estimating a road surface friction coefficient and correcting a control parameter in execution of a damping control for reducing torsional vibration of a vehicle drive system based on the estimated road surface friction coefficient.
According to this invention, even when the friction coefficient of the road surface on which the vehicle is running changes, the control parameter in executing the damping control for reducing the torsional vibration of the vehicle drive system can be adjusted according to the friction coefficient of the road surface. Thus, a damping control effect can be sufficiently obtained.

BRIEF DESCRIPTION OF DRAWINGS

FIG. 1 is a system configuration diagram of an electric drive vehicle according to an embodiment of this invention;
FIG. 2 is a control flow chart describing an operation control process of an electric motor;

FIG. 3 is a characteristic diagram of a map showing a relationship of a motor rotation speed, an accelerator pedal opening and an output torque;

FIG. 4 is a control block diagram describing an estimation process of a road surface friction coefficient $\mu$ performed in a step S3 of FIG. 2;

FIG. 5 is a control block diagram showing a damping control procedure according to this embodiment;

FIGS. 6A and 6B are diagrams showing equations of motion of the vehicle;

FIG. 7 is a flow chart describing an estimation process of the road surface friction coefficient $\mu$;

FIG. 8 is a control block diagram when the control block diagram shown in FIG. 5 is equivalently converted;

FIG. 9 is a diagram showing a characteristic curve of a transfer function $H(s)$ used in this embodiment;

FIG. 10 is a flow chart describing a damping control constant changing process;

FIG. 11 is a diagram showing a characteristic of a natural vibration frequency $fp$ corresponding to the road surface friction coefficient $\mu$;

FIG. 12 is a diagram showing a characteristic of a damping coefficient $\zeta$ corresponding to the road surface friction coefficient $\mu$;

FIGS. 13A-13C are a timing chart showing a control result by a comparative example; and

FIGS. 14A-14C are a time chart showing a control result according to this embodiment.

DESCRIPTION OF EMBODIMENT

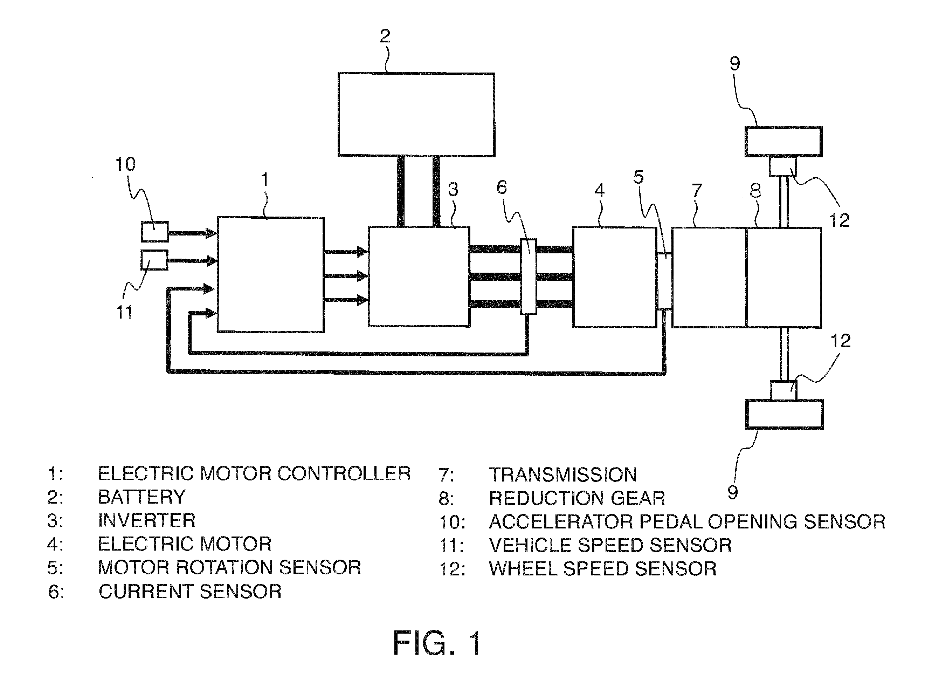

Referring to the drawings, an embodiment of this invention will be described. FIG. 1 is a diagram showing a system configuration of an electric drive vehicle according to the embodiment of this invention. Drive system components of the vehicle comprise a battery 2, an inverter 3, an electric motor 4, a transmission 7, a reduction gear 8, and drive wheels 9. Control system components of the vehicle comprise an electric motor controller 1, a motor rotation sensor 5, a current sensor 6, an accelerator pedal opening sensor 10, a vehicle speed sensor 11 and a wheel speed sensor 12.

The electric drive vehicle to which this embodiment is applied is a vehicle that supplies power from the battery 2 to the electric motor 4 and drives the drive wheels by power charged in the battery 2.

The electric motor controller 1 receives signals of various vehicle variables such as a vehicle speed $V$ detected by the vehicle speed sensor 11, an accelerator pedal opening $\theta$ detected by the accelerator pedal opening sensor 10, a rotation speed $\omega m$ of the electric motor detected by the motor rotation sensor 5 and a current of the electric motor 4 detected by the current sensor 6 ($iu, iv, iw$ in the case of three-phase alternating currents) in the form of digital signals from these respective sensors, generates a PWM signal for controlling the electric motor 4 according to the various vehicle variables, and generates a drive signal of the inverter 3 through a drive circuit according to the generated PWM signal.

The battery 2 is constituted by a secondary battery capable of charging and discharging, and charges regenerative power by the electric motor 4 and discharges drive power to the electric motor 4.

The inverter 3 is connected to each of the battery 2 and the electric motor 4, converts three-phase alternating current power generated by the electric motor 4 into a direct current and supplies it to the battery 2 and inverts direct current power of the battery 2 into three-phase alternating current power and supplies it to the electric motor 4. It should be noted that an inverter including two switching elements (e.g. power semiconductor elements such as IGBTs) for each phase and configured to convert and invert a direct current into an alternating current by ON/OFF controlling the switching elements according to a drive signal can be, for example, used as the inverter 3.

The electric motor 4 generates a drive force by the alternating current supplied by the inverter 3 and transmits the drive force to the left and right drive wheels 9 through the transmission 7 and the reduction gear 8. On the other hand, the electric motor 4 is rotated together with the left and right drive wheels 9 such as during deceleration running of the electric drive vehicle, thereby generating a regenerative drive force to regenerate energy. Further, as shown in FIG. 1, the electric motor 4 is provided with the current sensor 6 for detecting a current of each phase and the motor rotation sensor 5 for detecting the rotation speed $\omega m$ of the electric motor 4. The motor rotation sensor 5 may be constituted by, for example, a resolver and an encoder.

The transmission 7 is a two-speed transmission having a low gear and a high gear and normally set to obtain a highest performance in both an acceleration and a maximum vehicle speed. In this embodiment, a multi-speed transmission or a continuously variable transmission may be used instead of the two-speed transmission or a configuration including no transmission may also be adopted.

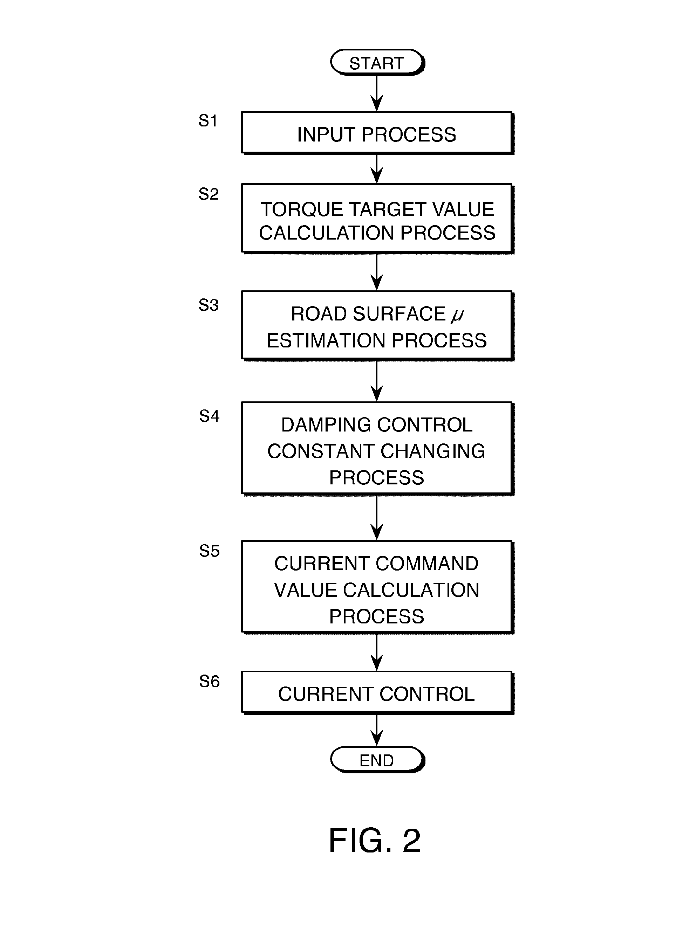

Next, a main operation control of the electric motor controller 1 will be described referring to a flow chart shown in FIG. 2, taking as an example a case where a road surface friction coefficient $\mu$ (hereinafter, referred to as a "road surface $\mu$") is low (e.g. compacted snow road surface or wet road surface). It should be noted that computations described below are performed in every predetermined control computation cycle of, e.g. ten milliseconds in the electric motor controller 1.

In an input process of a step S1, various signals required for various control computations described below are obtained through sensor inputs or communication with another controller. In this embodiment, three phase currents *iu, iv* and *iw* flowing in the electric motor 4, the rotation speed *ωm* of the electric motor 4, the vehicle speed *V* (driven wheel speed *V*), the accelerator pedal opening *θ* and a direct current voltage value *Vdc* are, for example, obtained in the input process of the step S1.

Specifically, in the step S1, the three-phase currents *iu, iv* and *iw* flowing in the electric motor 4 are obtained from the current sensor 6. It should be noted that since the total of three phase current values is zero at this time, *iw* may not be input from the sensor and may be calculated from the values of *iu* and *iv*. Further, the rotation speed *ωm* of the electric motor 4 is obtained by the motor rotation sensor 5 constituted by a resolver or an encoder. The vehicle speed *V* (driven wheel speed *V*) is obtained from the vehicle speed sensor 11. The accelerator pedal opening *θ* is obtained by the accelerator pedal opening sensor 10. Further, the direct current voltage value *Vdc* [V] can be obtained from a power supply voltage value transmitted by a voltage sensor (not shown) provided in a direct current power supply line or a battery controller (not shown) provided in the battery 2.

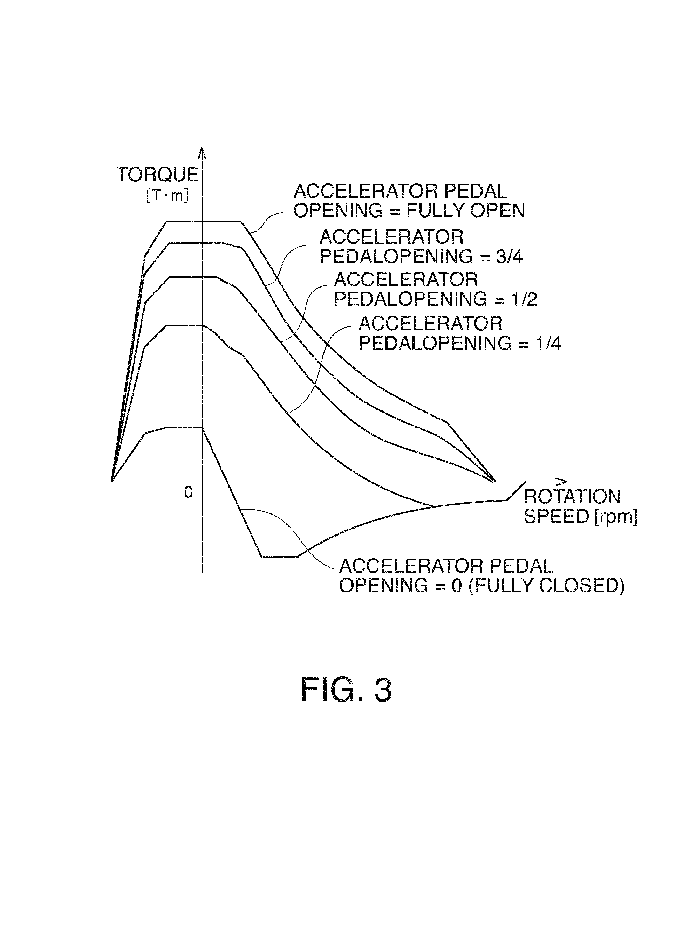

In a target torque calculation process of a step S2 following the step S1, a drive torque target value *Tm* is calculated based on the accelerator pedal opening *θ* and a drive motor rotation speed *ωm* using an accelerator pedal opening-torque table shown in FIG. 3.

Referring again to FIG. 2, in a road surface *μ* estimation process of a step S3 following the step S2, a friction coefficient *μ* of the road surface on which the vehicle is currently running is estimated based on the driven wheel speed *V*, a driven wheel acceleration *dV/dt* calculated from the driven wheel speed *V*, the drive motor rotation speed *ωm* and a vehicle equivalent mass *M* including a driven wheel inertia. The road surface *μ* estimation process of the step S3 will be described in detail later.

In a damping control constant changing process of a step S4, a natural vibration frequency *fp* of the vehicle is determined based on the road surface *μ* estimated in the step S3 described above and changes a control parameter of a damping control. Then, a first torque target value *Tm1* is calculated by performing a damping filter processing on the drive torque target value *Tm* calculated in the step S3 described above. A second torque target value *Tm2* is calculated using an external disturbance suppression filter. A drive torque command value *Tm** is then calculated by adding these torque target values. The damping control constant changing process of the step S4 will be described in detail later.

In a current command value calculation process of a step S5, dq-axis current target values *id*, iq** are obtained by referring to a predetermined table based on the drive torque command value *Tm** calculated in the step S4 described above, the electric motor rotation speed *ωm* and the direct current voltage value *Vdc.*

In a current control of a step S6, dq-axis current values *id, iq* are first computed from the three phase current values *iu, iv* and *iw* and the drive motor rotation speed *ωm.* Then, dq-axis voltage command values *vd, vq* are calculated from differences between the dq-axis current target values *id*, iq** calculated in the step S5 described above and the computed dq-axis current values Id, *iq.* It should be noted that a noninterference control may be added in this part.

Subsequently, three-phase voltage command values *vu, vv, vw* are computed from the dq-axis voltage command values *vd, vq* and the drive motor rotation speed *ωm.* PMW signals (on duty) *tu* [%], *tv* [%] and *tw* [%] are computed from the computed three-phase voltage command values *vu, vv* and *vw* and the direct current voltage *Vdc.* By ON/OFF controlling the switching elements of the inverter 3 by the thus obtained PWM signals, the electric motor 4 can be driven by a desired torque indicated by the drive torque command value *Tm*.*

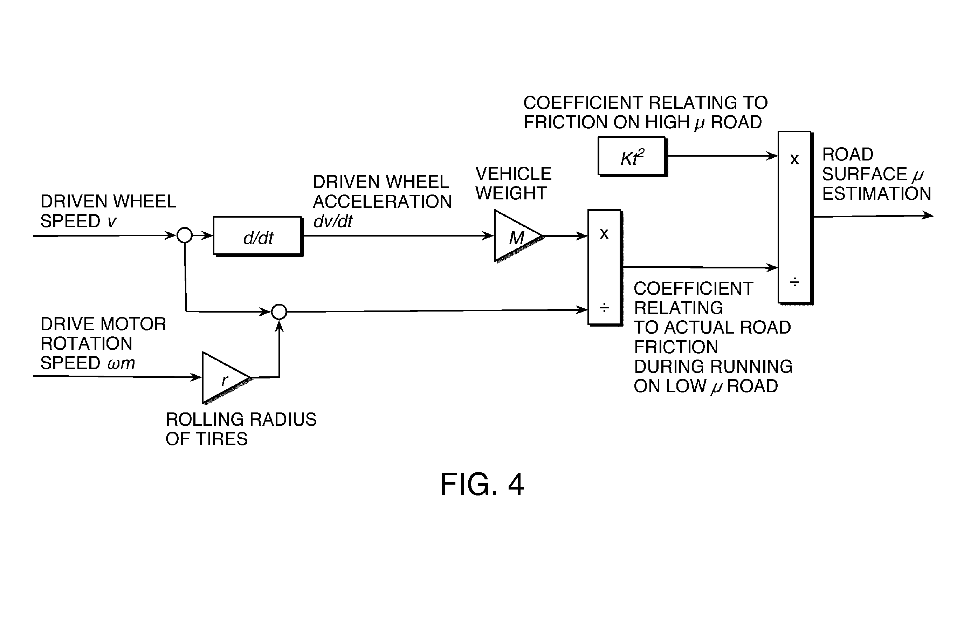

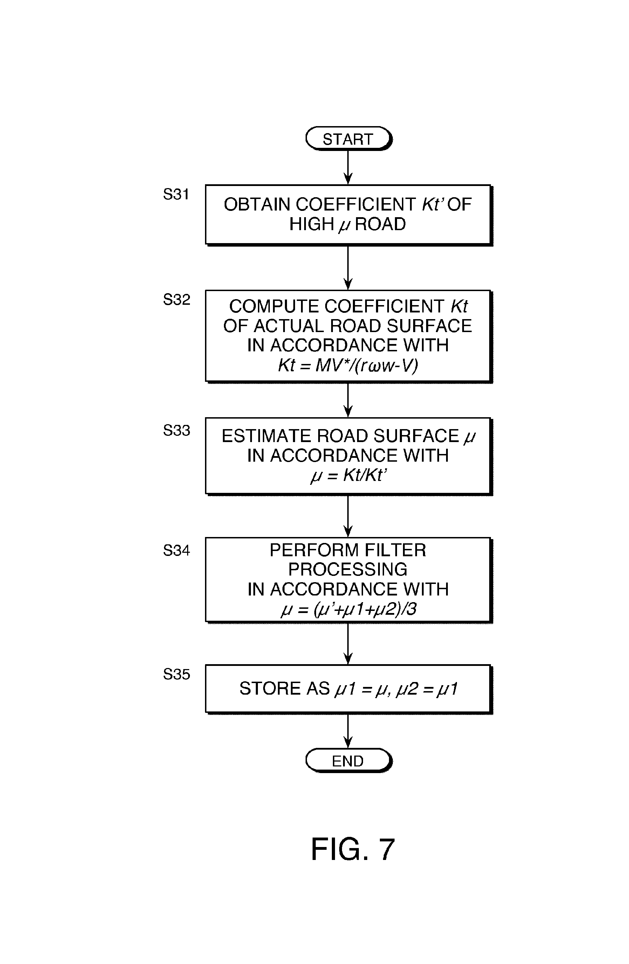

Next, the road surface *μ* estimation process of the step S3 of FIG. 2 will be described in detail based on a control block diagram shown in FIG. 4 and a flow chart shown in FIG. 7.

In the road surface *μ* estimation process according to this embodiment, a coefficient *Kt* on a low friction coefficient road surface (hereinafter, referred to as a "low *μ* road") is first estimated from the driven wheel speed *V*, the driven wheel acceleration *dV/dt* and the motor rotation speed *ωm*. Using a coefficient *Kt'* set in advance on a high friction coefficient road surface (hereinafter, referred to as a "high *μ* road") and the coefficient *Kt* on a low friction coefficient road surface thus calculated, *Kt/Kt'* is computed. The road surface *μ* is thereby estimated in real time. It should be noted that the coefficient *Kt'* is a coefficient relating to friction between tires and the road surface during running on the high *μ* road and the coefficient *Kt* is a coefficient relating to actual road surface friction during running on the low *μ* road here.

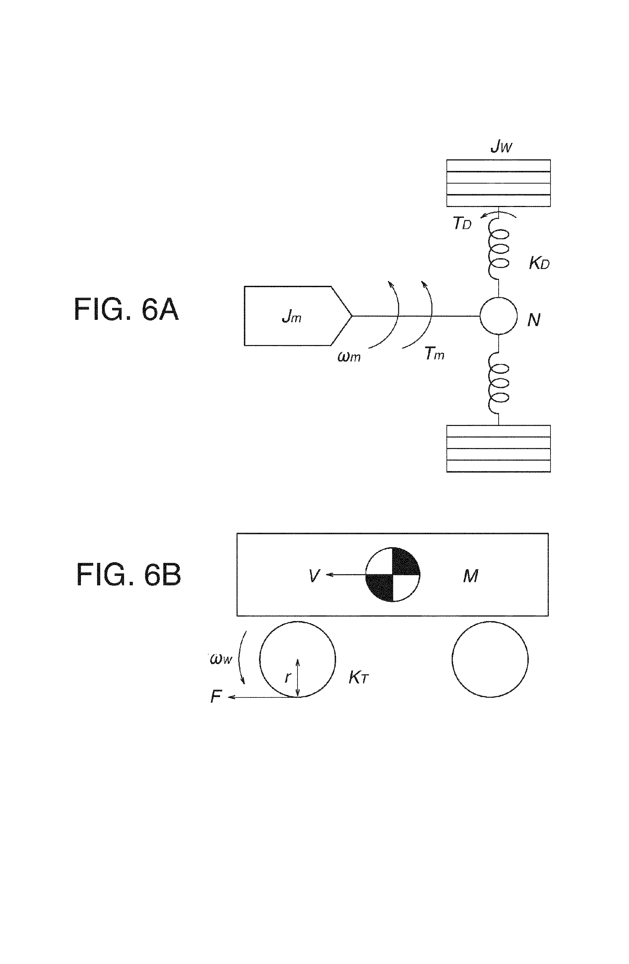

The road surface *μ* estimation process will now be described in detail. FIG. 6 is a diagram describing equations of motion of a drive torsional vibration system and each symbol in FIG. 6 is explained as follows.

*Jm:* inertia of drive motor
*Jw:* inertia of drive wheels
*M:* mass of vehicle
*KD:* torsional rigidity of drive system
*Kt:* coefficient relating to friction between tires and road surface
*N:* overall gear ratio
*R:* rolling radius of tires
*ωm:* angular velocity of drive motor

*Tm*: drive torque command value
*TD*: torque of drive wheels
*F*: force applied to vehicle
*V*: vehicle speed
$\omega w$: annular velocity of drive wheels

The following equations of motion can be derived from FIG. 6.

$$Jm \cdot \omega^*m = Tm - TD/N \tag{1}$$

$$2Jw \cdot \omega^*w = TD - rF \tag{2}$$

$$MV^* = F \tag{3}$$

$$TD = KD\int(\omega m/N - \omega w)dt \tag{4}$$

$$F = KT(r\omega w - V) \tag{5}$$

Here, "*" attached to the upper right hand side of each symbol indicates temporal differentiation in the above equations (1) to (5).

In estimating the road surface $\mu$, the coefficient *Kt* relating to the friction between the tires and the road surface computed in real time needs to be estimated. The following equation (6) can be derived from the above equations (3) and (5) and the following equation (7) can be obtained by transforming the equation (6).

$$MV^* = Kt(r\omega w - V) \tag{6}$$

$$Kt = MV^*/(r\omega w - V) \tag{7}$$

Thus, in this embodiment, the road surface $\mu$ on the low $\mu$ road is estimated by computing *Kt/Kt'* based on the coefficient *Kt* computed in real time using the above equation (7) and the coefficient *Kt* calculated in advance and relating to the friction between the tires and the road surface during running on the high $\mu$ road.

Specifically, in this embodiment, the coefficient *Kt* relating to actual road surface friction (coefficient relating to friction during running on the low $\mu$ road) is calculated based on the drive motor rotation speed $\omega m$, the rolling radius *r* of the tires, the vehicle speed *V* (driven wheel speed *V*) and the vehicle weight *M* in accordance with the above equation (7), and the road surface $\mu$ on the low $\mu$ road is estimated by computing *Kt/Kt'* using the coefficient *Kt* and the coefficient *Kt* calculated in advance and relating to the friction between the tires and the road surface during running on the high $\mu$ road as shown in the control block diagram of FIG. 4.

A specific flow of such a road surface $\mu$ estimation process performed in accordance with the control block diagram shown in FIG. 4 is described based on the flow chart of FIG. 7.

First, in a step S31, the coefficient *Kt'* relating to the friction between the tires and the road surface corresponding to the high $\mu$ road is obtained.

In a step S32, the coefficient *Kt* relating to the friction of the actual road surface is calculated based on the vehicle speed *V* (driven wheel speed *V*), the vehicle acceleration *dV/dt* (driven wheel acceleration *dV/dt*), the drive motor rotation speed $\omega m$ and the vehicle equivalent mass *M* including the driven wheel inertia in accordance with the above equation (7).

In a step S33, a road surface $\mu'$ is calculated based on the coefficient $Kt'$ corresponding to the high $\mu$ road and the coefficient $Kt$ of the actual road surface in accordance with the following equation (8).

$$\mu' = Kt/Kt' \qquad (8)$$

In a step S34, to calculate the road surface $\mu$, the road surface $\mu'$ calculated in the step S33 and the road surface $\mu$ calculated on the last occasion when the process was performed and the road surface $\mu$ calculated on the last but one occasion when the process was performed are read. The values calculated on the last occasion and on the last but one occasion are respectively read as a last value $\mu1$ and a second last value $\mu2$. The road surface $\mu$ is then calculated by performing a filter processing in accordance with the following equation (9). The calculated value is set as the road surface $\mu$ of the road surface on which the vehicle is currently running. It should be noted that the filter processing may use a low-pass filter or the like.

$$\mu = (\mu'+\mu1+\mu2)/3 \qquad (9)$$

Finally, in a step S35, the road surface $\mu$ obtained in the step S34 is stored as the last value $\mu1$ ($\mu1 \leftarrow \mu$) to be used in the subsequent computation processings, and the last value $\mu1$ read in the step S34 is stored as the second last value $\mu2$ ($\mu2 \leftarrow \mu1$), whereby this process is finished.

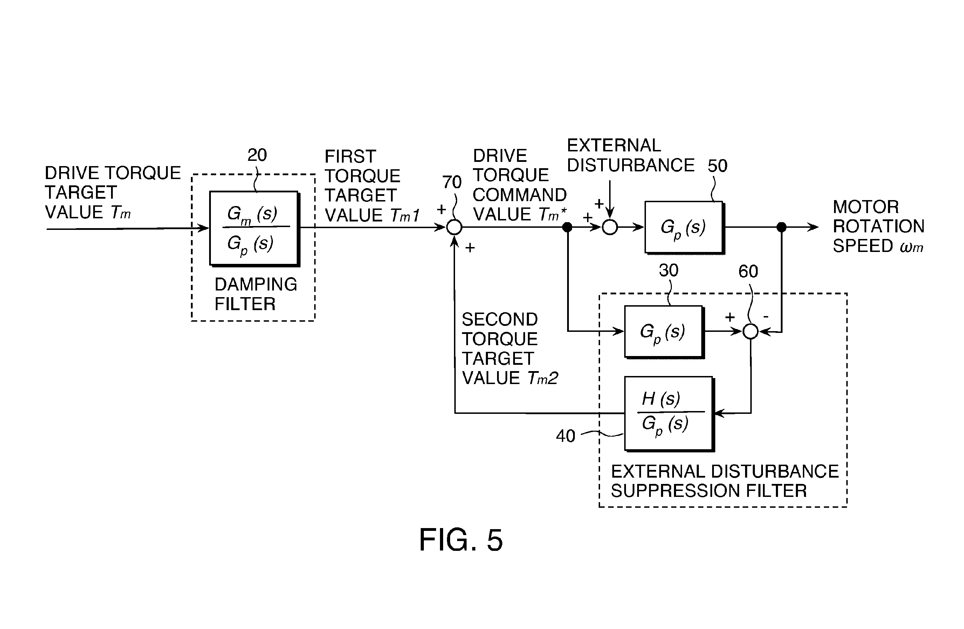

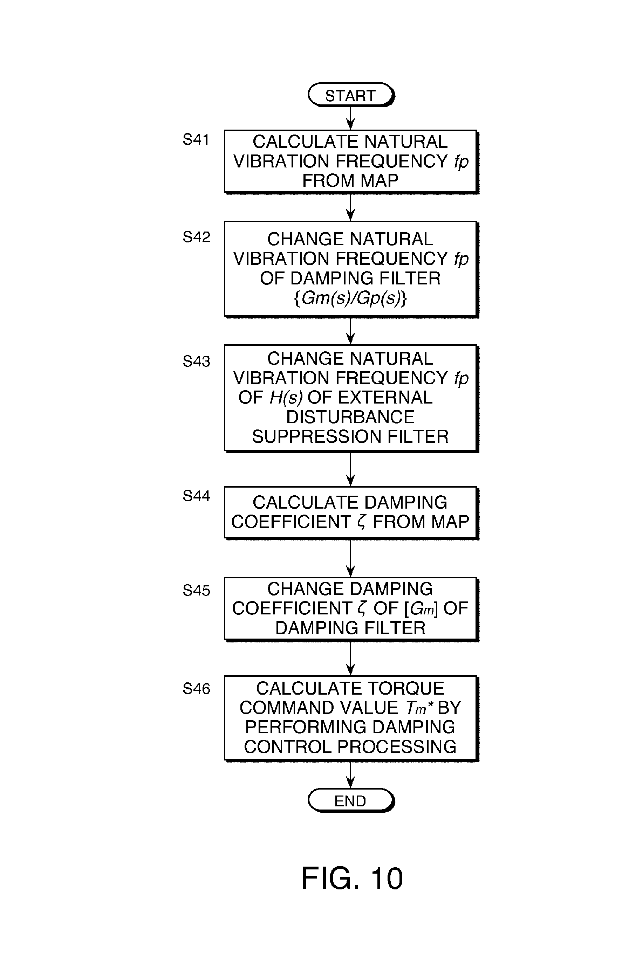

Next, the damping control constant changing process of the step S4 of FIG. 2 will be described in detail based on a control block diagram shown in FIG. 5 and a flow chart shown in FIG. 10.

First, the damping control in this embodiment will be described. In this embodiment, as shown in the control block diagram of FIG. 5, the first torque target value $Tm1$ is calculated by performing a damping filter processing on the drive torque target value $Tm,$ the second torque target value $Tm2$ is calculated using an external disturbance suppression filter, and a drive torque command value $Tm^*$ is calculated by adding these torque target values. Rotational vibration based on resonance with a wheel drive system from the drive motor to the wheels is suppressed by using the thus calculated drive torque command value $Tm^*$.

As shown in FIG. 5, control blocks according to this embodiment include a control block 20 having a transfer characteristic $Gm(s)/Gp(s),$ and the control block 20 calculates the first torque target value $Tm1$ by performing the filter processing on the drive torque target value $Tm,$ which was calculated based on the accelerator pedal opening $\theta$ and the drive motor rotation speed $\omega m$ using the accelerator pedal opening-torque table shown in FIG. 3, using a control filter having the transfer characteristic $Gm(s)/Gp(s).$ Herein, $Gp(s)$ is a model indicating a transfer characteristic of a torque input to the vehicle and the motor rotation speed, and $Gm(s)$ is a model (ideal model) indicating response targets of the torque input to the vehicle and the motor rotation speed.

Further, the control blocks according to this embodiment include a control block 30 having the above transfer characteristic $Gp(s),$ a control block 40 including a subtractor 60 for computing a deviation between an output value of the control block 30 and the motor rotation speed $\omega m,$ having a transfer characteristic $H(s)/Gp(s)$ and configured for filter output using the deviation computed by the subtractor 60 as an input, and an adder 70 for adding an output of the control block 40 and the first torque target value $T^*$. It should be noted that the above transfer characteristic $H(s)$ is so set that a difference between a denominator degree and a numerator degree of the transfer characteristic $H(s)$ is not smaller than a difference between a denominator degree and a numerator degree of the transfer characteristic $Gp(s).$

Here, the transfer characteristic $Gp(s)$ from the drive motor toque to the drive motor rotation speed is obtained as expressed in the following equations (10) to (18) from the equations of motion expressed in the above equations (1) to (5) calculated in the drive torsional vibration system shown in FIG. 6 as described above.

$$Gp(s) = (b_3s^3+ b_2s^2+b_1s+b_0)/s(a_4s^3+ a_3s^2+a_2s+a_1) \qquad (10)$$

$$a_4 = 2Jm \cdot Jw \cdot M \qquad (11)$$

$$a_3 = Jm(2Jw+Mr^2)KT \tag{12}$$

$$a_2 = (Jm+2Jw/N^2)M \cdot KD \tag{13}$$

$$a_1 = (Jm+2Jw/N^2+Mr^2/N^2)KD \cdot KT \tag{14}$$

$$b_3 = 2Jw \cdot M \tag{15}$$

$$b_2 = (2Jw+Mr^2)KT \tag{16}$$

$$b_1 = M \cdot KD \tag{17}$$

$$b_0 = KD \cdot KT \tag{18}$$

If a pole and a zero of a transfer function expressed in the above equation (10) are checked, one pole and one zero indicate values very close to each other. This is equivalent to that $\alpha$, $\beta$ of the following equation (19) indicate values very close to each other.

$$Gp(s) = (s+\beta)(b_2's^2+ b_1's+ b_0')/s(s+\alpha)(a_3's^2+ a_2's+ a_1') \tag{19}$$

Accordingly, (second-order) / (third-order) transfer characteristic $Gp(s)$ as shown in the following equation (20) is formed through a pole-zero offset (similar to $\alpha = \beta$) in the above equation (19).

$$Gp(s) = (b_2's^2+ b_1's+ b_0')/s(a_3's^2+ a_2's+ a_1') \tag{20}$$

Since the above equation (20) is realized by a microcomputer processing in this embodiment, Z-transform is performed for discretization using the following equation (21).

$$s = (2/T) \cdot \{(1-Z^{-1})/(1+Z^{-1})\} \tag{21}$$

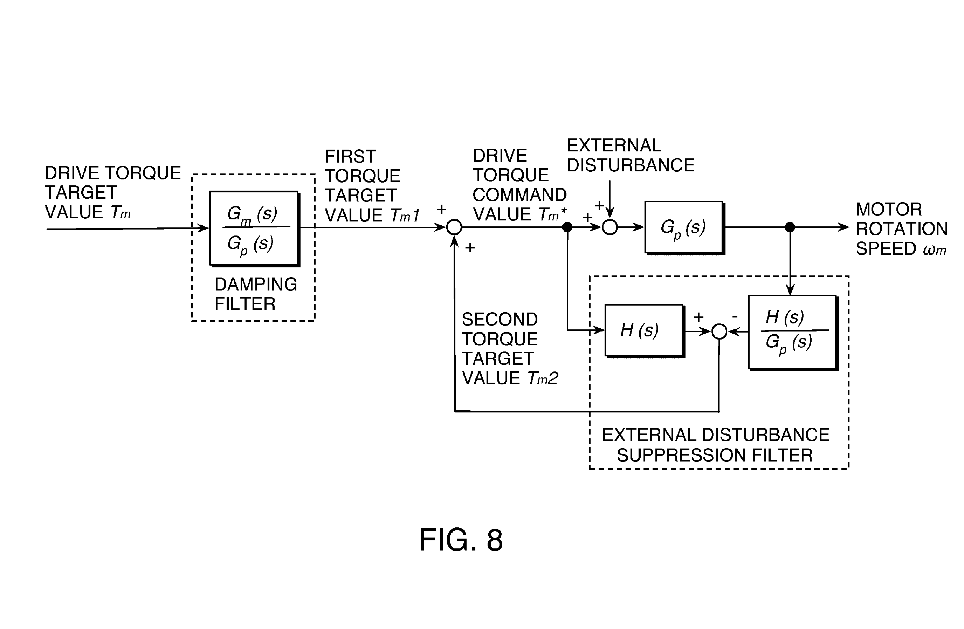

Herein, since the transfer characteristic $Gp(s)$ expressed in the above equation (21) has a pure integral term, the control blocks shown in FIG. 5 can be equivalently converted into control blocks shown in FIG. 8, specifically can be converted into a configuration including a control block having the transfer characteristic $H(s)$ and a control block having the transfer characteristic $H(s)/Gp(s)$, whereby the occurrence of a drift can be prevented.

Further, if the transfer characteristic $Gp(s)$ is so configured that each constant is changed according to a speed ratio when the speed ratio of the vehicle is variable, a highly accurate damping effect can be constantly obtained regardless of the speed ratio.

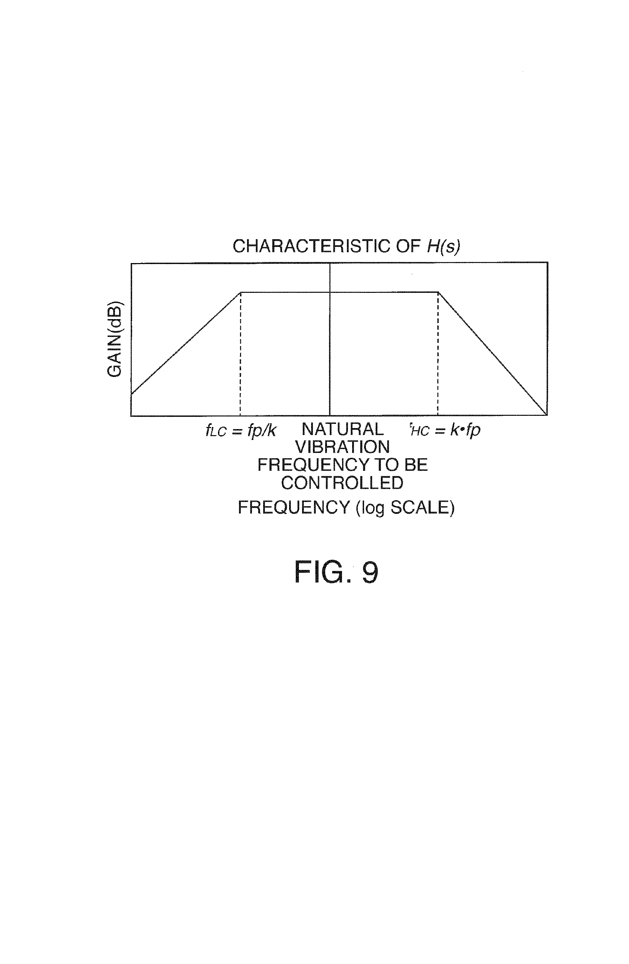

Next, the transfer characteristic $H(s)$ of the external disturbance suppression filter shown in FIG. 5 will be described. The transfer characteristic $H(s)$ serves as a feedback element for reducing only vibration in the case of being used as a band pass filter. At this time, if a characteristic of the band pass filter is set as shown in FIG. 9, a largest effect can be obtained. Specifically, the transfer characteristic $H(s)$ is so set that damping characteristics on a low pass side and on a high pass side substantially match and a torsional resonance frequency of the drive system is near a central part of a pass band on a logarithmic axis (log scale). For example, if the transfer characteristic $H(s)$ is a first-order high pass filter, it is configured as in the following equation (22) using the frequency $fp$ as the torsional resonance frequency of the drive system and $k$ as an arbitrary value.

$$H(s) = \tau Hs/\{(1+\tau Hs) \cdot (1+\tau Ls)\} \tag{22}$$

where,

$$\tau L = 1/(2\pi fHC),$$

$$fHC = kfp,$$

$$\tau H = 1/(2\pi fLC)$$

and

$$fLC = fp/k.$$

The above constant "$k$" is limited in magnitude to maintain the stability of the control system, but provides a larger effect with an increase in magnitude. Further, depending on cases, it is possible to select a value not greater than unity. This can be used by being Z-transformed and discretized as in the aforementioned case.

Next, the damping control constant changing process will be described.

First, a natural vibration angular velocity $\omega_p$ is as expressed in the following equation (23) using coefficients $a_1'$, $a_3'$ of the denominator of the above equation (20) expressing the model $Gp(s)$ of the drive torque input of the vehicle and the drive motor rotation speed.

$$\omega_p = (a_1'/a_3')^{1/2} \tag{23}$$

The natural vibration angular velocity $\omega_p$ can be converted into the natural vibration frequency $fp$ by the following equation (24).

$$fp = \omega_p/2\pi \tag{24}$$

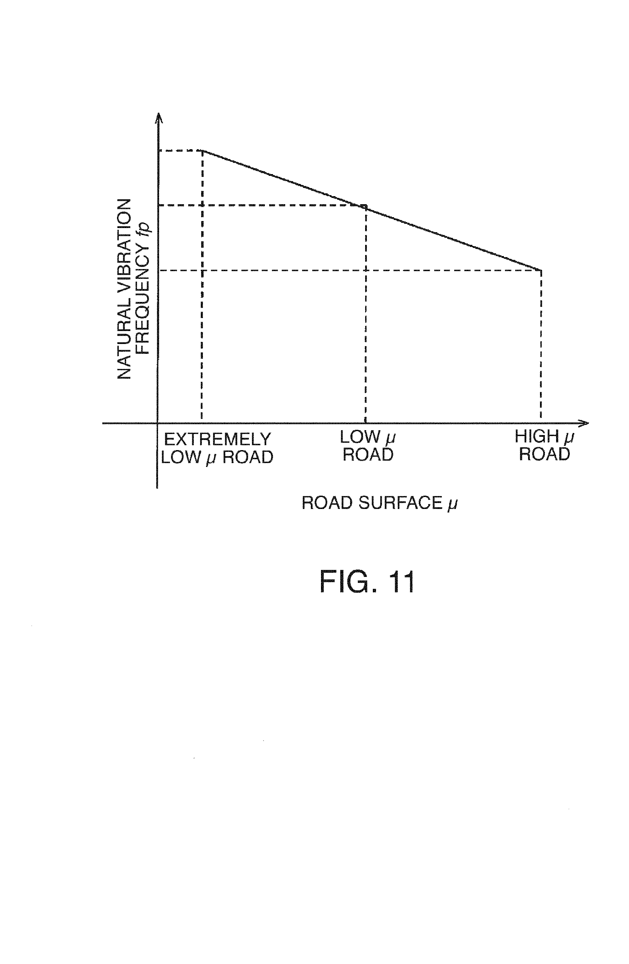

In this embodiment, the natural vibration frequency $fp$ by the road surface $\mu$ is calculated according to the road surface $\mu$ calculated according to the aforementioned method (see the step S34 of FIG. 7) using a map shown in FIG. 11, and the control parameter constituting the damping filter $Gm(s)/Gp(s)$, specifically the control parameter of $Gp(s)$ is adjusted using the natural vibration frequency $fp$. Specifically, to remove or reduce a frequency component formed from the calculated natural vibration frequency $fp$ from generated power, the first torque target value $Tm1$ is calculated by performing the filter processing on the drive torque target value $Tm$ using the damping filter $Gm(s)/Gp(s)$ whose control parameter is adjusted by the natural vibration frequency $fp$. It should be noted that, in this embodiment, a higher natural vibration frequency *fp* is set as the calculated road surface $\mu$ decreases and, conversely, a lower natural vibration frequency *fp* is set as the calculated road surface $\mu$ increases as shown in FIG. 11.

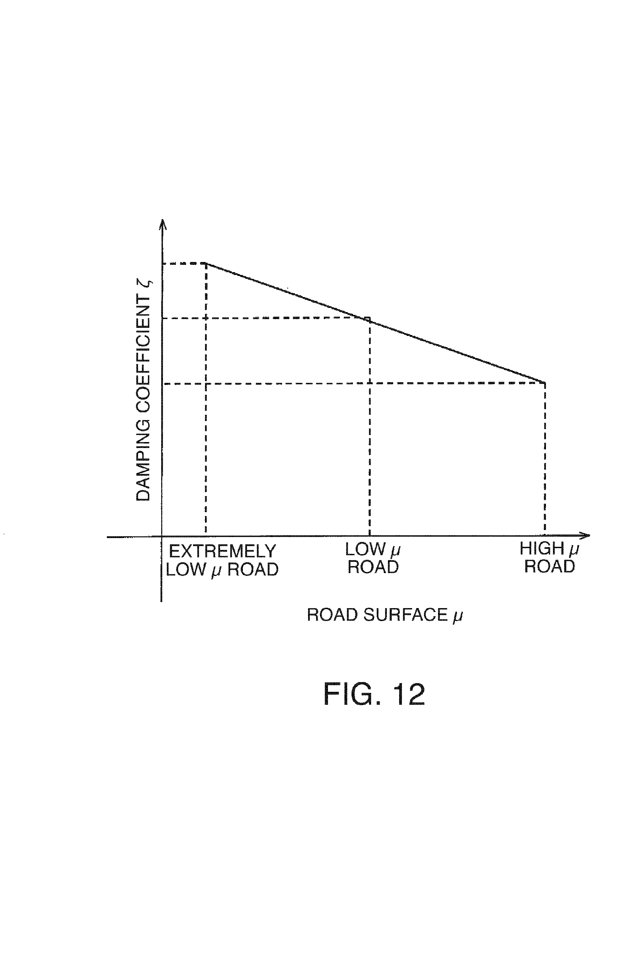

Further, in this embodiment, the damping coefficient $\zeta$ by the road surface $\mu$ is calculated according to the road surface $\mu$ calculated according to the aforementioned method (see the step S34 of FIG. 7) using a map shown in FIG. 12, and the control parameter constituting the damping filter *Gm(s)/Gp(s)*, specifically the control parameter of *Gm(s)* is adjusted using the damping coefficient $\zeta$. Particularly, according to this embodiment, the occurrence of a modeling error can be effectively suppressed even if the road surface $\mu$ becomes low by adopting such a configuration. It should be noted that, in this embodiment, a higher damping coefficient $\zeta$ is set as the calculated road surface $\mu$ decreases and, conversely, a lower damping coefficient $\zeta$ is set as the calculated road surface $\mu$ increases as shown in FIG. 12. Further, since the damping coefficient $\zeta$ is desirably a value greater than unity and a damping width near the natural vibration frequency can be, thereby, widened, an effect of suppressing vibration in response to torsional vibration of a vehicle drive system can be obtained even if there is a modeling error.

In addition, in this embodiment, the natural vibration frequency *fp* is calculated according to the road surface $\mu$ calculated according to the aforementioned method (see the step S34 of FIG. 7) using the map shown in FIG. 11. The control parameters constituting the external disturbance suppression filter *H(s)/Gp(s)*, specifically the control parameters of *H(s)* and *Gp(s)* are adjusted using the natural vibration frequency *fp*. Particularly, according to this embodiment, by adopting such a configuration, the effect of suppressing vibration in response to torsional vibration of the vehicle drive system can be further improved even if the road surface $\mu$ becomes low.

Next, a specific flow of such a damping control constant changing process performed in accordance with the control block diagram shown in FIG. 5 is described with reference to the flow chart shown in FIG. 9.

First, in a step S41, the natural vibration frequency *fp* corresponding to the road surface $\mu$ is calculated based on the road surface $\mu$ calculated in the step S34 of FIG. 7 referring to the map shown in FIG. 11.

In a step S42, the control parameter constituting *Gp(s)* of the damping filter *Gm(s)/Gp(s)* is adjusted using the natural vibration frequency *fp* calculated in the step S41 described above.

In a step S43, the control parameters of *H(s)* and *Gp(s)* of the external disturbance suppression filter *H(s)/Gp(s)* is adjusted using the natural vibration frequency *fp* calculated in the step S41 described above.

In a step S44, the damping coefficient $\zeta$ of *Gm(s)* corresponding to the road surface $\mu$ is calculated based on the road surface $\mu$ calculated in the step S34 of FIG. 7 using the map shown in FIG. 12.

In a step S45, the control parameter constituting *Gm(s)* of the damping filter *Gm(s)/Gp(s)* is adjusted using the damping coefficient $\zeta$ calculated in the step S44.

Finally, in a step S46, as shown in FIG. 5, the first torque target value *Tm1* is calculated by performing the damping filter processing on the drive torque target value *Tm* calculated in the step S2 using each control parameter calculated in the steps S41 to S45 described above, the second torque target value *Tm2* is calculated by performing the external disturbance filter processing based on the drive torque command value *Tm\** and an actual measurement value of the motor rotation speed, the drive torque command value *Tm\** is obtained by adding these and this process is finished.

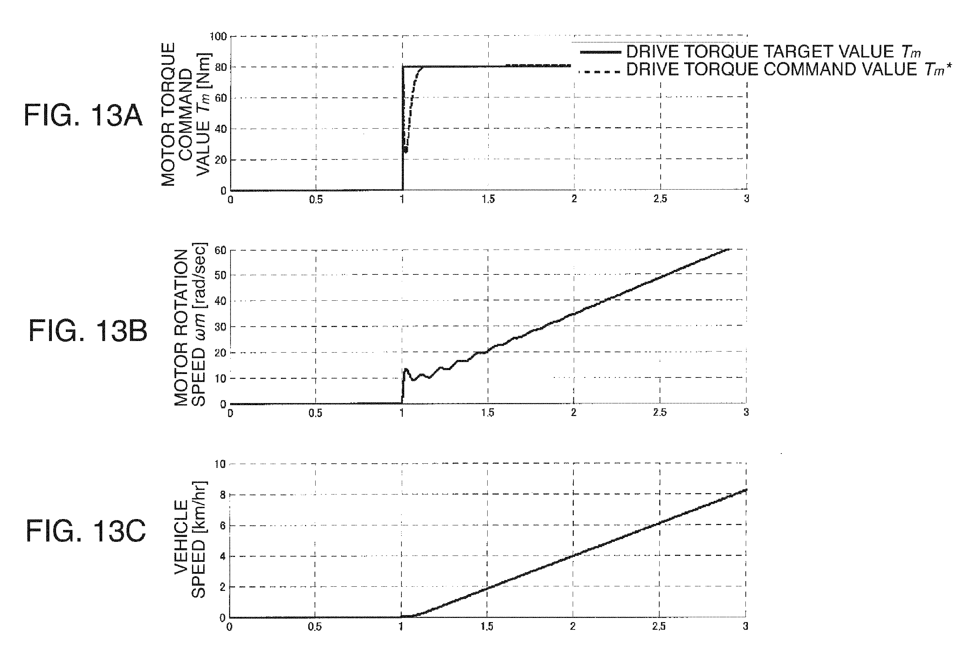

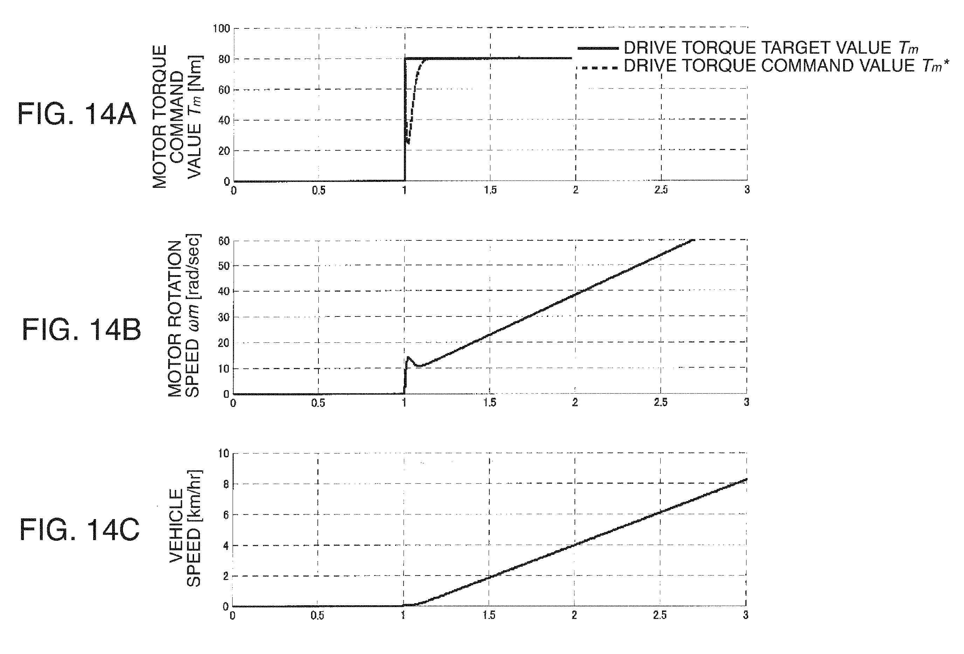

Next, the control of this embodiment and a conventional control are compared. FIG. 13 is a time chart showing a problem of the conventional control and FIG. 14 is a time chart showing the control result according to this embodiment. In examples shown in FIGS. 13 and 14, a case is illustrated where the drive torque target value *Tm* is input stepwise on a low $\mu$ road at time 1 sec to accelerate. It should be noted that, in a time period from time 0 sec to time 1 sec, motor command torque is 0 [Nm] and a vehicle is stationary.

First, a result in the case of acceleration by calculating the drive torque command value *Tm\** using the damping filter and the external disturbance suppression filter corresponding to a high $\mu$ road for the drive torque target value *Tm* is shown in the conventional example shown in FIG. 13. As shown in FIG. 13, in the conventional example, the damping control parameter is not optimal at the start of acceleration at time 1 sec, which results in hunting in the motor rotation speed from time 1 sec to time 2 sec.

In contrast, a result in the case of acceleration by calculating the drive torque command value *Tm\** by performing the filter processing on the drive torque target value *Tm* using the damping filter and the external disturbance suppression filter corresponding to the road surface $\mu$ is shown as an example according to this embodiment in FIG. 14. As shown in FIG. 14, according to this embodiment, the damping control parameter is appropriate at the start of acceleration at time 1 sec. As a result, the effect of suppressing vibration in response to torsional vibration of the vehicle drive system is reliably obtained and smooth acceleration is realized also on a low $\mu$ road.

As described above, according to the embodiment of this invention, the control parameter used in the damping control in executing the damping control for reducing torsional vibration of the vehicle drive system is adjusted according to the road surface $\mu$. Thus, a resonance point of the drive motor 4 and the wheel drive system from the drive motor 4 to the wheels can be reliably estimated even when the road surface $\mu$ changes. By reflecting this resonance point on the damping control, torsional vibration of the vehicle drive system when the road surface $\mu$ changes can be effectively suppressed. According to this embodiment, therefore, a reliable damping effect is obtained even when the accelerator pedal is depressed in a stopped state or a decelerated state on a low $\mu$ road, thereby reducing hunting in the rotation speed and realizing smooth acceleration.

Further, according to this embodiment, the filter processing is performed by the damping filter *Gm(s)/Gp(s)* on the drive torque target value *Tm* to change the control parameter of the damping filter *Gm(s)/Gp(s)* when the road surface $\mu$ changes. Accordingly, the effect of suppressing torsional vibration of the vehicle drive system can be precisely obtained also on a low $\mu$ road.

Still further, according to this embodiment, *H(s)* constituting the external disturbance suppression filter *H(s)/Gp(s)* has the band pass filter characteristic whose center frequency matches the torsional natural vibration frequency of the drive system of the vehicle corresponding to the road surface $\mu$ (see FIG. 9). As a result, a canceling torque is given at a zero phase difference to theoretically unnecessary vibration by configuring the drive system such that the torsional natural vibration frequency thereof is in a center of the normal band of *H(s)* on a logarithmic axis. This is effective in suppressing vibration. Therefore, according to this embodiment, the effect of suppressing vibration in response to torsional vibration of the vehicle drive system can be precisely obtained even on a low $\mu$ road by changing *H(s)* constituting the external disturbance suppression filter *H(s)/Gp(s)* when the road surface $\mu$ changes.

Still further, according to this embodiment, *Gm(s)* of the damping filter *Gm(s)/Gp(s)* calculates a normative response using the drive torque target value *Tm* as an input. By changing the control parameter of *Gm(s)* when the road surface $\mu$ changes, importance can be attached to the stability of the transfer characteristic of the *Gm(s)* as a normative response, whereby the effect of suppressing vibration in response to torsional vibration of the vehicle drive system can be precisely obtained even when there is a modeling error. Although the damping filter tends to have a modeling error as the road surface $\mu$ decreases, such a problem can be prevented by the above process.

Still further, according to this embodiment, the road surface $\mu$ is estimated based on the driven wheel speed, the acceleration, the drive wheel speed computed from the motor rotation speed and the vehicle equivalent weight including the driven wheel inertia. Thus, the road surface $\mu$ can be estimated in real time during vehicle running. The road surface $\mu$ can be estimated more accurately than that obtained by a method of calculating a slip ratio from a deviation between the drive wheels and the driven wheel and changing parameters according to the slip ratio.

It should be noted that, in the embodiment described above, the electric motor controller 1 corresponds to each of a damping control means, a friction coefficient estimation means, a control parameter correction means, a drive torque target value setting means and a motor rotation speed estimation means of this invention.

Although the invention has been described above with reference to a certain embodiment, the invention is not limited to the embodiment described above. Modifications and variations of the embodiment described above will occur to those skilled in the art, within the scope of the claims.

LIST OF REFERENCE SIGNS

1: electric motor controller
2: battery
3: inverter
4: electric motor
5: motor rotation sensor
6: current sensor
7: transmission
8: reduction gear
9: drive wheel
10: accelerator pedal opening sensor
11: vehicle speed sensor
12: wheel speed sensor

**Claims**

1. A damping control device for a vehicle using an electric motor for suppressing vibration of the vehicle using the electric motor as a power source, comprising:

   damping control means configured to reduce torsional vibration of a vehicle drive system;
   friction coefficient estimation means configured to estimate a friction coefficient of a road surface on which the vehicle is running; and

control parameter correction means configured to correct a control parameter in executing a damping control by the damping control means based on the friction coefficient of the road surface estimated by the friction coefficient estimation means.

2. The damping control device for the vehicle using the electric motor according to Claim 1, wherein the damping control means comprises a damping filter having a characteristic of removing or reducing a frequency component equivalent to the torsional vibration of the vehicle drive system based on vehicle information of the vehicle and an external disturbance suppression filter for suppressing external disturbance.

3. The damping control device for the vehicle using the electric motor according to Claim 2, further comprising a drive torque target value setting means configured to set a drive torque target value based on the vehicle information of the vehicle,
wherein the damping control means calculates a first torque target value by performing a filter processing on the drive torque target value using the damping filter having a characteristic $Gm(s)/Gp(s)$ configured by a model $Gp(s)$ of a transfer characteristic of a torque input to the vehicle and a motor rotation speed and an ideal model $Gm(s)$ of the transfer characteristic of the torque input and the motor rotation speed set in advance, and causes the electric motor to drive using a motor torque command value calculated based on the first torque target value; and the control parameter correction means corrects a control parameter of $Gp(s)$ constituting the damping filter based on a natural vibration frequency corresponding to the friction coefficient of the road surface estimated by the friction coefficient estimation means.

4. The damping control device for the vehicle using the electric motor according to Claim 3, wherein the control parameter correction means sets the natural vibration frequency of the control parameter of $Gp(s)$ to increase with a decrease in the friction coefficient of the road surface estimated by the friction coefficient estimation means.

5. The damping control device for the vehicle using the electric motor according to Claim 3 or Claim 4, further comprising a motor rotation speed estimation means configured to calculate a rotation speed estimated value of the electric motor by inputting the motor torque command value,
wherein the damping control means calculates a second torque target value by processing a difference between the rotation speed estimated value of the electric motor and an actual rotation speed of the electric motor by the external disturbance suppression filter having a characteristic $H(s)/Gp(s)$ configured by the model $Gp(s)$ and a transfer function $H(s)$ whose difference between a denominator degree and a numerator degree is not smaller than a difference between a denominator degree and a numerator degree of the model $Gp(s)$, and causes the electric motor to drive using a motor torque command value calculated based on the first and second torque target values; and the control parameter correction means corrects control parameters of $H(s)$ and $Gp(s)$ constituting the external disturbance suppression filter based on the natural vibration frequency corresponding to the friction coefficient of the road surface estimated by the friction coefficient estimation means.

6. The damping control device for the vehicle using the electric motor according to Claim 5, wherein the control parameter correction means sets the natural vibration frequency of the control parameters of $H(s)$ and $Gp(s)$ constituting the external disturbance suppression filter to increase with a decrease in the friction coefficient of the road surface estimated by the friction coefficient estimation means.

7. The damping control device for the vehicle using the electric motor according to Claim 2, further comprising a drive torque target value setting means configured to set a drive torque target value based on the vehicle information of the vehicle,
wherein the damping control means calculates a first torque target value by performing a filter processing on the drive torque target value using the damping filter having a characteristic $Gm(s)/Gp(s)$ configured by a model $Gp(s)$ of a transfer characteristic of a torque input to the vehicle and a motor rotation speed and an ideal model $Gm(s)$ of the transfer characteristic of the torque input and the motor rotation speed set in advance, and causes the electric motor to drive using a motor torque command value calculated based on the first torque target value, and the control parameter correction means corrects a control parameter of $Gm(s)$ constituting the damping filter according to the friction coefficient of the road surface estimated by the friction coefficient estimation means.

8. The damping control device for the vehicle using the electric motor according to Claim 7, wherein the control parameter correction means sets a damping width of the control parameter of $Gm(s)$ constituting the damping filter to increase with a decrease in the friction coefficient of the road surface estimated by the friction coefficient estimation means.

9. The damping control device for the vehicle using the electric motor according to any one of Claims 1 to Claim 8, wherein the friction coefficient estimation means estimates the friction coefficient of the road surface, on which the vehicle is running, based on a driven wheel speed, an acceleration, a drive wheel speed computed from a motor rotation speed and a vehicle equivalent weight including a driven wheel inertia.

10. A damping control method for reducing torsional vibration of a vehicle drive system of a vehicle using an electric motor as a power source, wherein:

a friction coefficient of a road surface on which the vehicle is running is estimated, and a control parameter in executing a damping control for reducing the torsional vibration of the vehicle drive system is corrected based on the estimated road surface friction coefficient.

| | | | |
|---|---|---|---|
| 1: | ELECTRIC MOTOR CONTROLLER | 7: | TRANSMISSION |
| 2: | BATTERY | 8: | REDUCTION GEAR |
| 3: | INVERTER | 10: | ACCELERATOR PEDAL OPENING SENSOR |
| 4: | ELECTRIC MOTOR | 11: | VEHICLE SPEED SENSOR |
| 5: | MOTOR ROTATION SENSOR | 12: | WHEEL SPEED SENSOR |
| 6: | CURRENT SENSOR | | |

FIG. 1

START

S1  INPUT PROCESS

S2  TORQUE TARGET VALUE
    CALCULATION PROCESS

S3  ROAD SURFACE $\mu$
    ESTIMATION PROCESS

S4  DAMPING CONTROL
    CONSTANT CHANGING
    PROCESS

S5  CURRENT COMMAND
    VALUE CALCULATION
    PROCESS

S6  CURRENT CONTROL

END

FIG. 2

FIG. 3

FIG. 4

EP 2 815 914 A1

DRIVE TORQUE TARGET VALUE $Tm$

20

DAMPING FILTER: $\dfrac{G_m(s)}{G_p(s)}$

FIRST TORQUE TARGET VALUE $Tm1$

70

DRIVE TORQUE COMMAND VALUE $Tm^*$

EXTERNAL DISTURBANCE

50

$G_p(s)$

MOTOR ROTATION SPEED $\omega_m$

SECOND TORQUE TARGET VALUE $Tm2$

30

$G_p(s)$

60

40

$\dfrac{H(s)}{G_p(s)}$

EXTERNAL DISTURBANCE SUPPRESSION FILTER

FIG. 5

FIG. 6A

$J_W$

$T_D$

$K_D$

$J_m$

$\omega_m$   $T_m$

$N$

FIG. 6B

$V$   $M$

$\omega_w$

$r$   $K_T$

$F$

START

S31 | OBTAIN COEFFICIENT $Kt'$ OF HIGH $\mu$ ROAD

S32 | COMPUTE COEFFICIENT $Kt$ OF ACTUAL ROAD SURFACE IN ACCORDANCE WITH $Kt = MV^*/(r\omega w - V)$

S33 | ESTIMATE ROAD SURFACE $\mu$ IN ACCORDANCE WITH $\mu = Kt/Kt'$

S34 | PERFORM FILTER PROCESSING IN ACCORDANCE WITH $\mu = (\mu' + \mu 1 + \mu 2)/3$

S35 | STORE AS $\mu 1 = \mu$, $\mu 2 = \mu 1$

END

FIG. 7

FIG. 8

CHARACTERISTIC OF *H(s)*

FIG. 9

START

S41 | CALCULATE NATURAL VIBRATION FREQUENCY $fp$ FROM MAP

S42 | CHANGE NATURAL VIBRATION FREQUENCY $fp$ OF DAMPING FILTER $\{Gm(s)/Gp(s)\}$

S43 | CHANGE NATURAL VIBRATION FREQUENCY $fp$ OF $H(s)$ OF EXTERNAL DISTURBANCE SUPPRESSION FILTER

S44 | CALCULATE DAMPING COEFFICIENT $\zeta$ FROM MAP

S45 | CHANGE DAMPING COEFFICIENT $\zeta$ OF $[Gm]$ OF DAMPING FILTER

S46 | CALCULATE TORQUE COMMAND VALUE $Tm^*$ BY PERFORMING DAMPING CONTROL PROCESSING

END

# FIG. 10

FIG. 11

FIG. 12

FIG. 13A

FIG. 13B

FIG. 13C

FIG. 14A

FIG. 14B

FIG. 14C

DRIVE TORQUE TARGET VALUE $T_m$
DRIVE TORQUE COMMAND VALUE $T_m^*$

MOTOR TORQUE COMMAND VALUE $T_m$ [Nm]

MOTOR ROTATION SPEED $\omega_m$ [rad/sec]

VEHICLE SPEED [km/hr]

EP 2 815 914 A1

26

<div align="center">

**INTERNATIONAL SEARCH REPORT**

</div>

| | International application No. |
|---|---|
| | PCT/JP2013/051495 |

**A. CLASSIFICATION OF SUBJECT MATTER**
*B60L15/20*(2006.01)i, *G05B11/36*(2006.01)i, *H02P29/00*(2006.01)i

According to International Patent Classification (IPC) or to both national classification and IPC

**B. FIELDS SEARCHED**

Minimum documentation searched (classification system followed by classification symbols)
B60L15/20, G05B11/36, H02P29/00

Documentation searched other than minimum documentation to the extent that such documents are included in the fields searched
Jitsuyo Shinan Koho          1922–1996     Jitsuyo Shinan Toroku Koho     1996–2013
Kokai Jitsuyo Shinan Koho     1971–2013     Toroku Jitsuyo Shinan Koho     1994–2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2003-9566 A  (Nissan Motor Co., Ltd.),<br>10 January 2003 (10.01.2003),<br>claims 1 to 2; paragraphs [0002], [0005],<br>[0032] to [0044]; fig. 1 to 7<br>& US 2002/0190683 A1 | 1-3,5,7,9-10<br>4,6,8 |
| Y | JP 2008-167623 A  (Toyota Motor Corp.),<br>17 July 2008 (17.07.2008),<br>paragraphs [0010], [0063]<br>(Family: none) | 1-3,5,7,9-10 |
| Y | JP 09-301145 A  (Mitsubishi Electric Corp.),<br>25 November 1997 (25.11.1997),<br>paragraph [0004]<br>& US 5952564 A          & DE 19720644 A<br>& KR 10-0220982 B | 1-3,5,7,9-10 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 April, 2013 (03.04.13) | 16 April, 2013 (16.04.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/051495

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2009-40174 A  (Nippon Soken, Inc.), 26 February 2009 (26.02.2009), paragraph [0058] & US 2010/0185351 A1  & WO 2009/020218 A1 & DE 112008001696 T  & CN 101687501 A | 1-3,5,7,9-10 |
| A | JP 2003-219514 A  (Hitachi, Ltd.), 31 July 2003 (31.07.2003), claim 1; paragraphs [0002], [0015]; fig. 1 to 6 (Family: none) | 1,4,6,8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP TOKUGAN201230284 B
- JP 2003009566 A